# EUROPÄISCHE PATENTSCHRIFT

(11) **EP 1 171 732 B1**
(45) Veröffentlichungstag und Bekanntmachung des Hinweises auf die Patenterteilung: **10.12.2003**
(21) Anmeldenummer: 01915003.6
(22) Anmeldetag: 02.02.2001
(51) Int. Cl.: F16L 37/084, F16L 37/12

(54) **VERBINDUNGSVORRICHTUNG**
CONNECTING DEVICE
DISPOSITIF DE RACCORDEMENT

(30) Priorität: 04.02.2000 DE 10004970
(43) Veröffentlichungstag der Anmeldung: 16.01.2002
(73) Patentinhaber: ROBERT BOSCH GMBH, 70442 Stuttgart (DE)
(72) Erfinder: ZELENY, Franco, 74354 Besigheim (DE); RAFF, Thomas, 71636 Ludwigsburg (DE)
(86) Internationale Anmeldenummer: DE0100432
(87) Internationale Veröffentlichungsnummer: WO01057427

(56) Entgegenhaltungen:
- EP-A- 0 756 125
- DE-A- 2 502 830
- DE-A- 2 557 674
- FR-A- 2 678 349

## Beschreibung

### Stand der Technik

Die Erfindung betrifft eine Verbindungsvorrichtung zur Verbindung eines Anschlußschlauchs oder Anschlußrohrs mit einer geeigneten Aufnahmeeinrichtung, die die Verbindungsvorrichtung aufnimmt. Dabei weist diese Aufnahmeeinrichtung zumindest ein Rastelement auf, das mittels zumindest eines an der Aufnahmeeinrichtung angebrachten Betätigungselements betätigbar ist.

Eine solche Aufnahmeeinrichtung ist aus der FR-A-2 678 349 oder der EP 0 756 125 A1 bekannt. Die aus dieser Druckschrift hervorgehende Rohrverbindung umfaßt eine Aufnahmeeinrichtung, in welche ein Anschlußstutzen einführbar ist. Der Anschlußstutzen hat eine Rastnase, welche von mehreren Rastelementen der Aufnahmeeinrichtung hintergriffen wird. Die Rastelemente sind bei einem in Fig. 10 dieser Druckschrift dargestellten Ausführungsbeispiel hebelförmig ausgebildet und mittels außenseitig an der Aufnahmeeinrichtung vorgesehener Betätigungselemente so betätigbar, daß sie die Rastnase des in die Aufnahmeeinrichtung eingeführten Anschlußstutzens bei Bedarf wieder freigeben.

Von der mit der Aufnahmeeinrichtung zusammenwirkenden Verbindungsvorrichtung ist in der EP 0 756 125 A1 lediglich der Anschlußstutzen dargestellt, der mit einem Anschlußschlauch oder einem Anschlußrohr verbindbar sein kann. Maßnahmen zu einer automatischen Betätigung der Betätigungselemente der Aufnahmeeinrichtung sind bei der lediglich aus dem Anschlußstutzen bestehenden Verbindungsvorrichtung nicht vorgesehen.

Der Anschlußstutzen ist zwar in einfacher Weise in die Aufnahmeeinrichtung einführbar und wird in der eingeführten Position von zwei Dichtringen abgedichtet. Ferner ist die Verrastung des Rastelements der Aufnahmeeinrichtung mit der Rastnase des Anschlußstutzens sichergestellt, so daß der Anschlußstutzen nicht unbeabsichtigt aus der Aufnahmeeinrichtung herausgezogen werden kann. In der Praxis besteht jedoch das Bedürfnis, den Anschlußstutzen der Verbindungsvorrichtung schnell und sicher mit der Aufnahmeeinrichtung zu verbinden und bei einer insgesamt einfachen Handhabung wieder von dieser zu lösen. Insbesondere wenn die aus der EP 0 756 125 A1 bekannte Aufnahmeeinrichtung bei einer Brennstoffverteilerleitung an einer Brennkraftmaschine zum Einsatz kommt, besteht das Bedürfnis, einen Brennstoffschlauch mit der den Füllstutzen der Brennstoffverteilerleitung darstellenden Aufnahmeeinrichtung für einen Probelauf der Brennkraftmaschine schnell und einfach in der Handhabung zu verbinden und ohne Handhabungsprobleme wieder von dieser zu entfernen.

Besteht die mit der Aufnahmeeinrichtung zusammenwirkende Verbindungsvorrichtung nur aus einem einfachen, rohrförmigen Anschlußstutzen, so ist es schon schwierig, die für die Einführung des Anschlußstutzens in die Aufnahmeeinrichtung erforderliche axiale Kraft aufzubringen. Das Entfernen des Anschlußstutzens aus der Aufnahmeeinrichtung gestaltet sich umständlich, da der Anschlußstutzen aus der Aufnahmeeinrichtung herausgezogen werden muß und gleichzeitig die radial außenseitig angeordneten Betätigungselemente an der Aufnahmeeinrichtung zum Lösen der Rastverbindung betätigt werden müssen.

### Vorteile der Erfindung

Die erfindungsgemäße Verbindungsvorrichtung mit den kennzeichnenden Merkmalen des Hauptanspruchs hat demgegenüber den Vorteil, daß das die Rastnase des Anschlußstutzens hintergreifende Rastelement der Aufnahmeeinrichtung beim Ankoppeln der erfindungsgemäßen Verbindungsvorrichtung an die Aufnahmeeinrichtung von der Betätigungshülse automatisch betätigt wird. Dieser Betätigungsvorgang wird durch die Stützhülse unterstützt, die sich an der Aufnahmeeinrichtung abstützt. Durch die automatische Betätigung des Rastelements der Aufnahmeeinrichtung wird die Handhabbarkeit erheblich verbessert, da die Bedienperson den Anschlußstutzen lediglich in die Öffnung der Aufnahmeeinrichtung einführen und anschließend die gesamte Verbindungsvorrichtung in Richtung auf die Aufnahmeeinrichtung schieben muß, wodurch die Betätigung des Rastelements der Aufnahmeeinrichtung und somit das Verrasten des Anschlußstutzes in der Aufnahmeeinrichtung selbsttätig ausgelöst wird. Die Montage der Verbindungsvorrichtung kann an der Aufnahmeeinrichtung deshalb mit einem einfachen Handgriff erfolgen. Die Stützhülse stellt in Verbindung mit der ersten Feder sicher, daß nach dem Verrasten des Anschlußstutzens in der Aufnahmeeinrichtung die Betätigungshülse von dem Betätigungselement der Aufnahmeeinrichtung durch axiales Verschieben der Betätigungshülse entfernt wird und deshalb das Rastelement der Aufnahmeeinrichtung arretiert bleibt.

Durch die in den Unteransprüchen aufgeführten Maßnahmen sind vorteilhafte Weiterbildungen und Verbesserungen der im Hauptanspruch angegebenen Verbindungsvorrichtung möglich.

Vorteilhaft ist eine von außen durch die Bedienperson ergreifbare Schiebehülse vorgesehen, die vorzugsweise über ein an der Schiebehülse befestigtes Deckelelement an einer Stufe des Anschlußstutzens angreift und eine axiale Verschiebung des Anschlußstutzens in Richtung auf die Aufnahmeeinrichtung erlaubt. Der Anschlußstutzen, die Stützhülse, die Betätigungshülse und die Schiebehülse sind vorzugsweise koaxial zueinander angeordnet, wobei die Schiebehülse die Betätigungshülse, die Betätigungshülse die Stützhülse und die Stützhülse den Anschlußstutzen umgibt.

Die Betätigungshülse ist vorzugsweise gegenüber der Schiebehülse unter Vorspannung einer zweiten Feder axial verschiebbar. Über diese zweite Feder wird die Betätigungshülse beim Einführen des Anschlußstutzens in die Aufnahmeeinrichtung in Richtung auf die Aufnahmeeinrichtung gedrückt, so daß die Betätigungshülse die Betätigungselemente und somit die Rastelemente der Aufnahmeeinrichtung betätigt. Wird danach die Schiebehülse von der Bedienperson losgelassen, so entspannt sich die zweite Feder und übt keine Kraft mehr auf die Betätigungshülse aus. Die zwischen der Stützhülse und der Betätigungshülse eingespannte erste Feder hingegen drückt die Betätigungshülse von der Aufnahmeeinrichtung weg, so daß die Betätigungshülse das Betätigungselement der Aufnahmeeinrichtung freigibt und somit das Rastelement der Aufnahmeeinrichtung so lange arretiert bleibt, bis die Bedienperson die Schiebehülse zum Lösen der Verbindungsvorrichtung von der Aufnahmeeinrichtung wieder in Richtung auf die Aufnahmeeinrichtung verschiebt. Die zweite Feder kann zwischen dem Deckelement und einer Stirnfläche der Betätigungshülse angeordnet sein.

Entsprechend einer besonders bevorzugten Weiterbildung ist an der Schiebehülse ein Rastbolzen vorgesehen, der radial so verschiebbar ist, daß er mit einer an dem Anschlußstutzen vorgesehenen Stufe in Eingriff gebracht werden kann. Der Rastbolzen ist dabei vorzugsweise gegen eine dritte Feder so verschiebbar, daß der Rastbolzen in einer ungedrückten Grundstellung die axiale Bewegung zwischen dem Anschlußstutzen und der Schiebehülse freigibt und in einer gedrückten Betätigungsstellung den Anschlußstutzen bei einer von der Aufnahmeeinrichtung wegführenden Bewegung der Schiebehülse mitführt.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: den Anschlußstutzen der erfindungsgemäßen Verbindungsvorrichtung, der in eine geeignete, geschnitten dargestellte Aufnahmeeinrichtung eingeführt ist,
- Fig. 2: eine Seitenansicht eines Ausführungsbeispiels der erfindungsgemäßen Verbindungsvorrichtung,
- Fig. 3: die Frontansicht des in Fig. 2 dargestellten Ausführungsbeispiels der erfindungsgemäßen Verbindungsvorrichtung,
- Fig. 4: einen Schnitt entlang der Linie IV-IV in Fig. 3 und
- Fig. 5: den Ausschnitt V in Fig. 4.

### Beschreibung des Ausführungsbeispiels

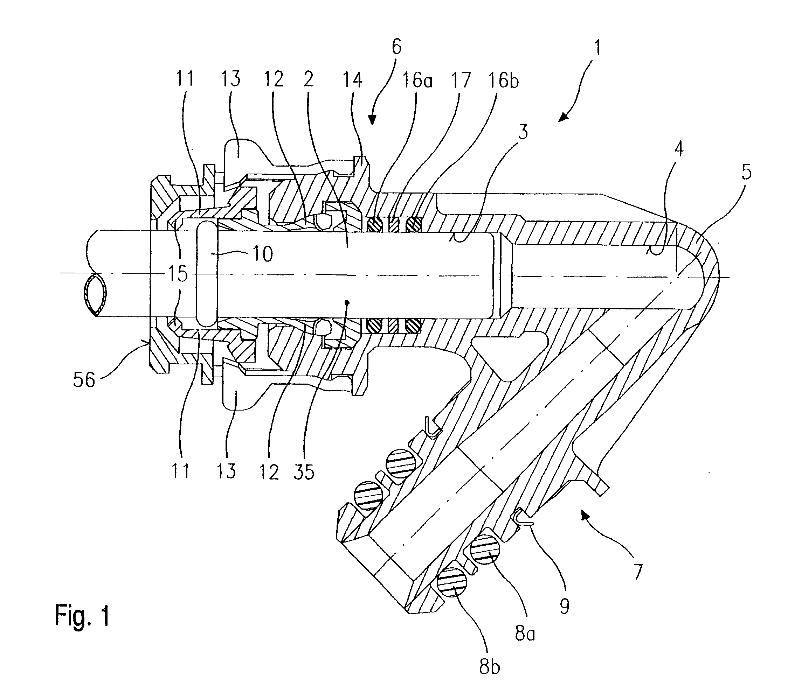

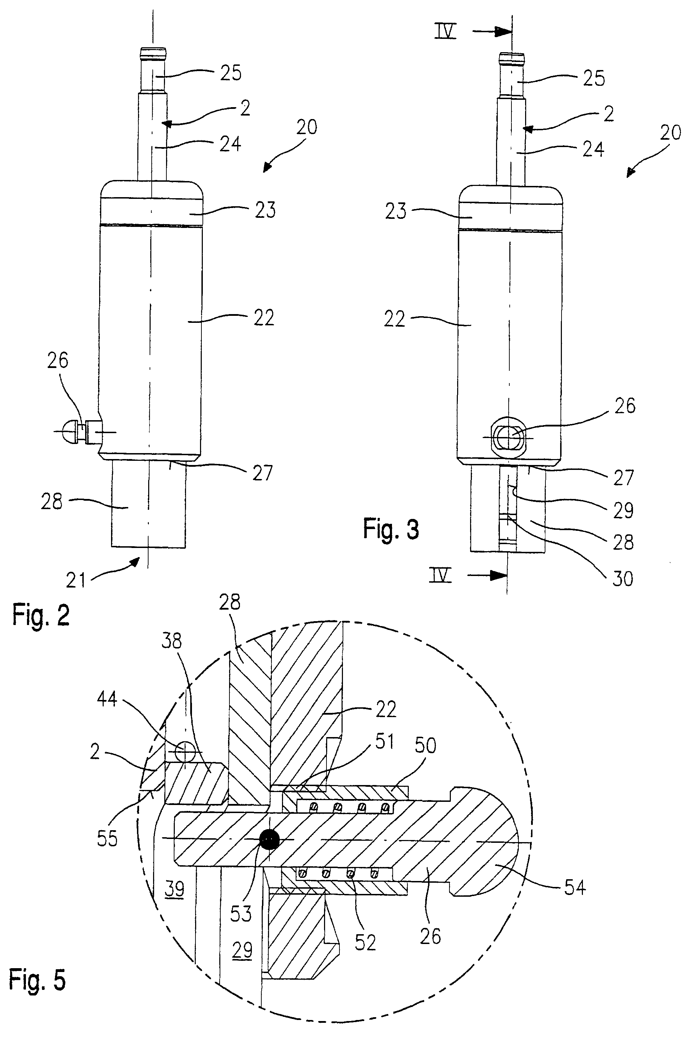

Bevor anhand der Fig. 2 bis 5 ein Ausführungsbeispiel der erfindungsgemäßen Verbindungsvorrichtung im einzelnen beschrieben wird, wird nachfolgend anhand von Fig. 1 zum besseren Verständnis der Erfindung zunächst eine Aufnahmeeinrichtung 1 beschrieben, welche mit der erfindungsgemäßen Verbindungsvorrichtung zusammenwirkt.

Fig. 1 zeigt ein Ausführungsbeispiel einer für das Zusammenwirken mit der erfindungsgemäßen Verbindungsvorrichtung geeigneten Aufnahmeeinrichtung 1, wobei ein Anschlußstutzen 2 der erfindungsgemäßen Verbindungsvorrichtung in die Aufnahmeeinrichtung 1 eingeführt ist. Der Anschlußstutzen 2 ist rohrförmig ausgebildet, wobei in Fig. 1 nur das in die Aufnahmeeinrichtung 1 einführbare Ende des Anschlußstutzens 2 dargestellt ist. Die Aufnahmeeinrichtung 1 weist eine gestufte Aufnahmeausnehmung 3 auf, die in einen Strömungskanal 4 eines abgewinkelten Abschnitts 5 übergeht. Während die erfindungsgemäße Verbindungsvorrichtung 1 mit einem ersten Schenkel 6 der Aufnahmeeinrichtung 1 verbunden ist, ist die Aufnahmeeinrichtung 1 ihrerseits an einem zweiten Schenkel 7 beispielsweise mit einer Brennstoffverteilerleitung verbindbar, welche der Versorgung von Brennstoffeinspritzventilen mit Brennstoff dient. Zur Abdichtung gegenüber der Brennstoffverteilerleitung sind an dem Schenkel 7 zwei beispielsweise als O-Ringe ausgebildete Dichtelemente 8a und 8b vorgesehen. Die Arretierung an der Brennstoffverteilerleitung erfolgt durch eine Rastfeder 9.

Die erfindungsgemäße Verbindungsvorrichtung dient insbesondere dazu, bei einem Probelauf der Brennkraftmaschine, beispielsweise unmittelbar nach dem Abschluß der Fertigung der Brennkraftmaschine, eine einfach handhabbare Verbindung eines mit dem Anschlußstutzen 2 verbindbaren Anschlußschlauches, welcher der Brennstoffzufuhr dient, mit der Aufnahmeeinrichtung 1 zu ermöglichen. Dabei soll die Montage und Demontage der Verbindungsvorrichtung an bzw. von der Aufnahmeeinrichtung 1 mit einem einzigen Handgriff erfolgen können.

Der Anschlußstutzen 2 hat eine Rastnase 10 in Form eines wulstartigen Abschnitts mit erweitertem Durchmesser. Die Rastnase 10 wird in dem in Fig. 1 dargestellten eingesetzten Zustand von mehreren umfänglich verteilt angeordneten Rastelementen 11 der Aufnahmeeinrichtung 1 hintergriffen. Die Rastelemente 11 sind hebelförmig ausgebildet und an zugehörigen Lagerelementen 12 gelagert. Ebenfalls umfänglich verteilt angeordnete Betätigungselemente 13 ragen radial aus dem Gehäuse 14 der Aufnahmeeinrichtung 1 heraus. Wenn auf die Betätigungslemente 13 eine radial nach innen gerichtete Betätigungskraft ausgeübt wird, so werden die Rastelemente 11 so verkippt, daß deren Endabschnitte 15 von dem Anschlußstutzen 2 abheben, so daß die Rastnase 10 an den Rastelementen 11 entweder zum Einführen des Anschlußstutzens 2 oder zum Herausziehen des Anschlußstutzens 2 vorbeigeführt werden kann.

Zur Abdichtung des Anschlußstutzens 2 gegenüber dem Gehäuse 14 der Aufnahmeeinrichtung 1 sind zwei beispielsweise als O-Ringe ausgebildete Dichtelemente 16a und 16b vorgesehen, die durch einen Distanzring 17 voneinander getrennt sind.

Fig. 2 zeigt eine Seitenansicht eines Ausführungsbeispiels der erfindungsgemäßen Verbindungsvorrichtung 20. Das in Fig. 2 untere Ende 21 der Verbindungsvorrichtung 20 dient zur Verbindung mit der in Fig. 2 nicht dargestellten Aufnahmeeinrichtung 1. Erkennbar ist eine Schiebehülse 22, welche beispielsweise durch eine Schraubverbindung mit einem Deckelelement 23 verbunden ist. Das Deckelelement 23 weist eine Ausnehmung auf, aus welcher ein der Aufnahmevorrichtung 1 abgewandter Abschnitt 24 des Anschlußstutzens 2 herausragt. An einem Verbindungsabschnitt 25 kann der Anschlußstutzen 2 mit einem Anschlußschlauch verbunden werden, der insbesondere der Brennstoffzufuhr dient. Die Schiebehülse 22 kann eine geriffelte oder in anderer Weise angerauhte Oberfläche aufweisen, so daß die Oberfläche der Schiebehülse 22 durch die Bedienperson bequem ergriffen werden kann. Aus der Schiebehülse 22 ragt ein Rastbolzen 26 heraus, auf dessen Funktion weiter unten noch genauer eingegangen wird. Aus dem der Aufnahmeeinrichtung 1 zugewandten Ende 27 der Schiebehülse 22 ragt eine Betätigungshülse 28 heraus.

Fig. 3 zeigt das in Fig. 2 dargestellte Ausführungsbeispiel in einer Frontansicht. In sämtlichen Figuren der Zeichnung sind für jeweils gleiche Elemente übereinstimmende Bezugszeichen verwendet, um die Zuordnung zu erleichtern. Auf eine wiederholende Beschreibung wird insoweit verzichtet.

Wie aus Fig. 3 erkennbar, hat die Betätigungshülse 28 einen Schlitz 29, durch welchen der Bolzen 26 hindurch ragt.

Erkennbar ist ferner ein in die Betätigungshülse 28 eingesetzter Ring 30, auf dessen Funktion weiter unten noch eingegangen wird.

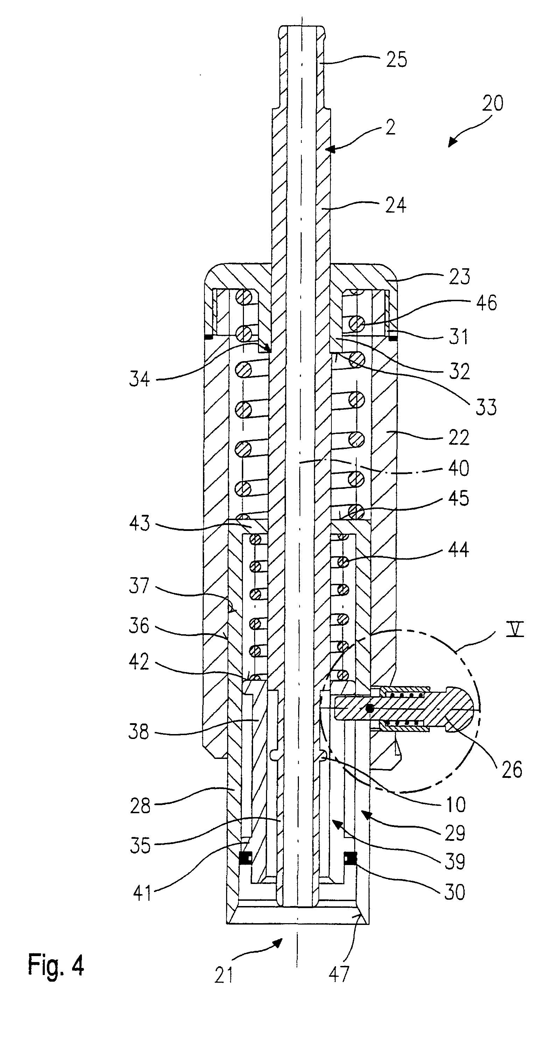

Fig. 4 zeigt einen Schnitt entlang der Linie IV-IV in Fig. 3. Wie aus Fig. 4 erkennbar, ist das Deckelelement 23 topfförmig ausgebildet und an einem Gewinde 31 mit der Schiebehülse 22 im Ausführungsbeispiel verschraubt. Grundsätzlich können die Schiebehülse 22 und das Deckelelement 23 auch einstückig ausgebildet sein oder z. B. miteinander verschweißt sein. An einem inneren, dornartigen Fortsatz 32 weist das Deckelelement 23 eine Stirnfläche 33 auf, welche an einer Stufe 34 des Anschlußstutzens 2 angreift, so daß die axiale freie Beweglichkeit des Anschlußstutzens 2 in Bezug auf die Schiebehülse 22 einseitig in einer von der Aufnahmeeinrichtung 1 wegführenden Richtung begrenzt ist.

Der Anschlußstutzen 2 weist an einem in die Aufnahmeeinrichtung 1 einführbaren Abschnitt 35 die bereits beschriebene Rastnase 10 auf. Die Schiebehülse 22 umgibt zumindest teilweise die Betätigungshülse 28, deren Außenfläche 36 an der Innenfläche 37 der Schiebehülse 22 geführt ist. Die Betätigungshülse 28 umgibt ihrerseits eine Stützhülse 38, die im Bereich des Schlitzes 29 der Betätigungshülse 28 ebenfalls einen Schlitz 39 aufweist. Die Stützhülse 38 umgibt teilweise den Anschlußstutzen 2. Der rohrförmig ausgebildete Anschlußstutzen 2, die Stützhülse 38, die Betätigungshülse 28 und die Schiebehülse 22 sind bezüglich einer Mittelachse 40 koaxial zueinander angeordnet.

Die axiale Beweglichkeit der Stützhülse 38 in Richtung auf das der Aufnahmeeinrichtung 1 zugewandte Ende 21 ist durch den in die Betätigungshülse 28 eingesetzten Ring 30 begrenzt, an welchem eine radiale Erweiterung 41 der Stützhülse 28 anschlägt. Zwischen einer der Aufnahmeeinrichtung 1 abgewandten Stirnfläche 42 der Stützhülse 28 und einem an dem der Aufnahmeeinrichtung 1 abgewandtem Ende an der Betätigungshülse 28 angeformten Kragen 43 ist eine erste Feder 44 eingespannt, die bei einer axialen Verschiebung der Stützhülse 38 gegenüber der Betätigungshülse 28 vorgespannt wird. Dagegen ist zwischen einer der Aufnahmeeinrichtung 1 abgewandten Stirnfläche 45 der Betätigungshülse 28 und dem Deckelelement 23 eine zweite Feder 46 eingespannt, die bei einer axialen Verschiebung der Betätigungshülse 28 gegenüber der Schiebehülse 22 vorgespannt wird. Die Federkonstante der zweiten Feder 46 ist größer bemessen, als die Federkonstante der ersten Feder 44. Die Betätigungshülse 28 hat an dem der Aufnahmeeinrichtung 1 zugewandten Ende 21 einen konischen Abschnitt 47.

Fig. 5 zeigt den Ausschnitt V in Fig. 4 in einer vergrößerten Darstellung, wobei insbesondere der Bereich um den Rastbolzen 26 besser erkennbar ist. Der Rastbolzen 26 ist in ein Bolzengehäuse 50 eingesetzt, das an einem Gewinde 51 mit der Schiebehülse 22 verschraubt ist und eine dritte Feder 52 aufnimmt. Ein Querstift 53 schlägt an dem Bolzengehäuse 50 an und verhindert, daß der Rastbolzen 26 aus dem Bolzengehäuse 50 herausgezogen werden kann. Der Rastbolzen 26 ragt durch den axialen Schlitz 29 der Betätigungshülse 28 und durch den axialen Schlitz 39 der Stützhülse 38 hindurch.

Wenn der Rastbolzen 26 durch Druck auf sein Kopfende 54 radial einwärts unter Vorspannung der dritten Feder 52 bewegt wird, kommt der Bolzen 26 mit einer Stufe 55 des Anschlußstutzens 2 in Eingriff.

Nachfolgend wird die Funktionsweise der erfindungsgemäßen Verbindungsvorrichtung 20 beim Montieren an der Aufnahmeeinrichtung 1 und Demontieren von der Aufnahmeeinrichtung 1 beschrieben.

Die Montage der Verbindungsvorrichtung 20 an der Aufnahmeeinrichtung 1 erfolgt in der Weise, daß die Bedienperson die Verbindungsvorrichtung 20 an der Schiebehülse 22 ergreift und so in Richtung auf die Aufnahmeeinrichtung 1 führt, daß der Anschlußstutzen 2 in die Aufnahmeausnehmung 3 eingeführt wird. Dabei steht das vordere Ende des Anschlußstutzens 2 zunächst an den noch geschlossenen Rastelementen 11 an. Dadurch wird die Schiebehülse 22 soweit verschoben, bis die Stufe 34 des Anschlußstutzens 2 an der Stirnfläche 33 anschlägt und somit die auf die Schiebehülse 22 ausgeübte Schiebekraft auf den Anschlußstutzen 2 übertragen wird. Gleichzeitig steht die Stützhülse 38 an einer Stirnfläche 56 der Aufnahmeeinrichtung 1 an. Beim weiteren Verschieben des Anschlußstutzens 2 zusammen mit der Schiebehülse 22 wird sowohl die erste Feder 44 als auch die zweite Feder 46 vorgespannt. Da die zweite Feder 46 jedoch eine wesentlich größere Federkonstante als die erste Feder 44 hat, wird bereits nach einem geringfügigen Verschiebeweg der Schiebehülse 22 über die zweite Feder 46 eine so große Kraft auf die Betätigungshülse 28 übertragen, daß sich die Betätigungshülse 28 mit ihrem konischen Abschnitt 47 über die aus der Aufnahmeeinrichtung 1 radial hervorstehenden Betätigungselemente 13 schiebt. Die Betätigungselemente 13 werden dadurch radial nach innen verkippt und betätigen die hebelförmigen Rastelemente 11, so daß sich die Endabschnitte 15 der Rastelemente 11 radial nach außen bewegen. Die Rastnase 10 des Anschlußstutzens 2 kann deshalb bei einem weiteren Verschieben der Schiebehülse 22 an den Endabschnitten 15 der Rastelemente 11 vorbeigeführt werden, so daß der Anschlußstutzen 2 in seine in Fig. 1 dargestellte Endposition gelangt.

Läßt die Bedienperson nun die Schiebehülse 22 los, so wird die Schiebehülse 22 aufgrund der Federkraft der zweiten Feder 46 in ihre Ausgangslage zurückgeführt. Da die zweite Feder 46 nunmehr keine Kraft mehr auf die Betätigungshülse 28 ausübt, dominiert die in Gegenrichtung gerichtete Kraft der ersten Feder 44 und schiebt die Betätigungshülse 28 von der Aufnahmeeinrichtung 1 weg, so daß die Betätigungshülse 28 die Betätigungselemente 13 und somit die Rastelemente 11 der Aufnahmeeinrichtung 1 so freigibt, daß die Rastelemente 11 die Rastnase 10 des Anschlußstutzens 2 hintergreifen, so wie dies in Fig. 1 dargestellt ist. Die erfindungsgemäße Verbindungsvorrichtung 20 ist deshalb an der Aufnahmeeinrichtung 1 sicher arretiert.

Zum Demontieren der Verbindungsvorrichtung 20 von der Aufnahmeeinrichtung 1 wird im wesentlichen in gleicher Weise vorgegangen, wobei zusätzlich durch die Bedienperson der Rastbolzen 6 radial einwärts gedrückt wird. Die Bedienperson ergreift also erneut die Schiebehülse 22 und führt die Schiebehülse 22 so lange in Richtung auf die Aufnahmeeinrichtung 1, bis die Stirnfläche 33 des Deckelelements 23 an der Stufe 34 des in der Aufnahmeeinrichtung 1 festgehaltenen Anschlußstutzens 2 anschlägt. In dieser Position ist aufgrund der Beaufschlagung durch die zweite Feder 46 die Betätigungshülse 28 über die Betätigungselemente 13 der Aufnahmeeinrichtung 1 geschoben, so daß die Endabschnitte 15 der Rastelemente 11 radial nach außen gekippt sind und die Rastnase 10 des Anschlußstutzens 2 freigegeben ist.

Würde die Verschiebehülse 22 ohne Drücken des Rastbolzens 26 von der Aufnahmeeinrichtung 1 axial zurückgeführt bzw. losgelassen, so würde der Anschlußstutzen 2 aufgrund der Reibung in der Aufnahmeeinrichtung 1 verbleiben, und die Betätigungshülse 28 würde die Rastelemente 11 wieder freigeben, ohne daß der Anschlußstutzen 2 von der Aufnahmeeinrichtung 1 gelöst wäre. Wird jedoch der Rastbolzen 26 radial nach innen gedrückt, so wird beim axialen Verschieben der Schiebehülse 22 von der Aufnahmeeinrichtung 1 weg der Anschlußstutzen 2 mitgeführt und von der Aufnahmeeinrichtung 1 gelöst. Die Betätigungshülse 28 gibt über die Betätigungselemente 13 die Rastelemente 11 erst dann wieder frei, wenn die Rastnase 10 des Anschlußstutzens 2 die Endabschnitte 15 der Rastelemente 11 passiert hat.

Die Bedienung der erfingungsgemäßen Verbindungsvorrichtung 20 ist daher äußerst handhabungsfreundlich und gewährleistet gleichzeitig eine sichere Brennstoffverbindung. Die Bedienung kann mit nur einer Hand der Bedienperson erfolgen, wohingegen ohne die erfindungsgemäßen Maßnahmen mit einer Hand der Anschlußstutzen 2 in die Aufnahmeeinrichtung 1 eingeführt werden muß bzw. aus dieser herausgezogen werden muß und gleichzeitig mit der anderen Hand die Betätigungselemente 13 betätigt werden müssen. Die erfindungsgemäße Verbindungsvorrichtung 20 ist deshalb insbesondere für provisorische kurzzeitige Verbindungen eines Brennstoffschlauchs mit einer Brennstoffverteilerleitung einer Brennkraftmaschine geeignet, wenn eine Vielzahl von Verbindungsvorgängen an einer Vielzahl von Brennkraftmaschinen für deren Probelauf in kurzen Zeitabschnitten hintereinander durchgeführt werden muß.

Die Erfindung ist nicht auf das dargestellte Ausführungsbeispiel beschränkt. Insbesondere können die Betätigungshülse 28, die Stützhülse 38 und die Schiebehülse 22 auch in anderer Weise ausgebildet sein. Die Verbindung zwischen dem Anschlußstutzen 2 und der Schiebehülse 22 über den Rastbolzen 26 kann bei einer vereinfachten Ausgestaltung auch entfallen, wobei dann gleichzeitig der Anschlußstutzen 2 aus der Aufnahmeeinrichtung 1 herausgezogen werden muß und die Schiebehülse 22 in einer Position gehalten werden muß, bei welcher die Betätigungshülse 28 die Betätigungselemente 13 der Aufnahmeeinrichtung 1 betätigt.

## Patentansprüche

1. Verbindungsvorrichtung (20) zur Verbindung eines Anschlußschlauchs oder Anschlußrohrs mit einer Aufnahmeeinrichtung (1), wobei die Aufnahmeeinrichtung (1) zumindest ein Rastelement (11) aufweist, das mittels zumindest eines außenseitig an der Aufnahmeeinrichtung vorgesehenen Betätigungselements (13) betätigbar ist, mit einem rohrförmigen Anschlußstutzen (2), der mit dem Anschlußschlauch oder Anschlußrohr verbindbar ist und der eine Rastnase (10) oder Rastnut aufweist, die mit dem Rastelement (11) der Aufnahmeeinrichtung (1) in Eingriff gebracht werden kann,
**gekennzeichnet durch**
eine Betätigungshülse (28) zur Betätigung des Betätigungselements (13) der Aufnahmeeinrichtung (1), und eine Stützhülse (38), die sich an der Aufnahmeeinrichtung (1) abstützt und gegenüber der Betätigungshülse (28) unter Vorspannung einer ersten Feder (44) axial verschiebbar ist.

2. Verbindungsvorrichtung nach Anspruch 1,
**dadurch gekennzeichnet,**
**daß** eine von außen ergreifbare Schiebehülse (22) vorgesehen ist, die an dem Anschlußstutzen (2) angreift.

3. Verbindungsvorrichtung nach Anspruch 2,
**dadurch gekennzeichnet,**
**daß** der Anschlußstutzen (2), die Stützhülse (38), die Betätigungshülse (28) und die Schiebehülse (22) koaxial zueinander angeordnet sind.

4. Verbindungsvorrichtung nach Anspruch 3,
**dadurch gekennzeichnet,**
**daß** die Schiebehülse (22) zumindest teilweise die Betätigungshülse (28) umgibt, die Betätigungshülse (28) zumindest teilweise die Stützhülse (38) umgibt und die Stützhülse (38) zumindest teilweise den Anschlußstutzen (2) umgibt.

5. Verbindungsvorrichtung nach einem der Ansprüche 2 bis 4,
**dadurch gekennzeichnet,**
**daß** mit der Schiebehülse (22) ein Deckelelement (23) verbunden ist, das von dem Anschlußstutzen (2) durchdrungen ist.

6. Verbindungsvorrichtung nach Anspruch 5,
**dadurch gekennzeichnet,**
**daß** eine Stufe (34) des Anschlußstutzens (2) an dem Deckelelement (23) anstößt, so daß die axiale Verschiebbarkeit des Anschlußstutzens (2) gegenüber der Schiebehülse (22) einseitig begrenzt ist.

7. Verbindungsvorrichtung nach Anspruch 6,
**dadurch gekennzeichnet,**
**daß** die Betätigungshülse (28) gegenüber der Schiebehülse (22) unter Vorspannung einer zweiten Feder (46) axial verschiebbar ist.

8. Verbindungsvorrichtung nach Anspruch 7,
**dadurch gekennzeichnet,**
**daß** die zweite Feder (46) zwischen dem Deckelelement (23) und einer dem Anschlußschlauch bzw. Anschlußrohr zugewandten Stirnfläche (45) der Betätigungshülse (28) angeordnet ist.

9. Verbindungsvorrichtung nach einem der Ansprüche 2 bis 8,
**dadurch gekennzeichnet,**
**daß** an der Schiebehülse (22) zumindest ein Rastbolzen (26) vorgesehen ist, der radial so verschiebbar ist, daß er mit einer an dem Anschlußstutzen (2) vorgesehenen Stufe (55) in Eingriff gebracht werden kann.

10. Verbindungsvorrichtung nach Anspruch 9,
**dadurch gekennzeichnet,**
**daß** der Rastbolzen (26) gegen eine dritte Feder (52) verschiebbar ist, wobei der Rastbolzen (26) in einer ungedrückten Grundstellung die axiale Bewegung zwischen dem Anschlußstutzen (2) und der Schiebehülse (22) freigibt und in eine gedrückten Betätigungstellung den Anschlußstutzen (2) bei einer von der Aufnahmeeinrichtung (1) wegführenden Bewegung der Schiebehülse (22) mitführt.

11. Verbindungsvorrichtung nach einem der Ansprüche 1 bis 10,
**dadurch gekennzeichnet,**
**daß** die Stützhülse (38) von der ersten Feder (44) gegen einen Anschlag an der Betätigungshülse (28) gedrückt wird.

12. Verbindungsvorrichtung nach Anspruch 11,
**dadurch gekennzeichnet,**
**daß** der Anschlag durch einen in die Betätigungshülse (28) eingesetzten Ring (30) gebildet ist.

## Claims

1. Connecting device (20) for connecting a connection hose or connection pipe to a locating device (1), the locating device (1) having at least one latching element (11) which can be actuated by means of at least one actuating element (13) provided on the outside of the locating device, having a tubular connection piece (2) which can be connected to the connection hose or connection pipe and which has a latching lug (10) or latching groove which can be brought into engagement with the latching element (11) of the locating device (1), **characterized by** an actuating sleeve (28) for actuating the actuating element (13) of the locating device (1), and by a supporting sleeve (38) which is supported on the locating device (1) and is axially displaceable relative to the actuating sleeve (28) under preloading of a first spring (44).

2. Connecting device according to Claim 1, **characterized in that** a sliding sleeve (22) which can be gripped from outside is provided, this sliding sleeve (22) acting on the connection piece (2).

3. Connecting device according to Claim 2, **characterized in that** the connection piece (2), the supporting sleeve (38), the actuating sleeve (28) and the sliding sleeve (22) are arranged coaxially to one another.

4. Connecting device according to Claim 3, **characterized in that** the sliding sleeve (22) at least partly surrounds the actuating sleeve (28), the actuating sleeve (28) at least partly surrounds the supporting sleeve (38), and the supporting sleeve (38) at least partly surrounds the connection piece (2).

5. Connecting device according to one of Claims 2 to 4, **characterized in that** a cap element (23), through which the connection piece (2) passes, is connected to the sliding sleeve (22).

6. Connecting device according to Claim 5, **characterized in that** a step (34) of the connection piece (2) butts against the cap element (23), so that the axial displaceability of the connection piece (2) relative to the sliding sleeve (22) is limited on one side.

7. Connecting device according to Claim 6, **characterized in that** the actuating sleeve (28) is axially displaceable relative to the sliding sleeve (22) under preloading of a second spring (46).

8. Connecting device according to Claim 7, **characterized in that** the second spring (46) is arranged between the cap element (23) and an end face (45), facing the connection hose or connection pipe, of the actuating sleeve (28).

9. Connecting device according to one of Claims 2 to 8, **characterized in that** at least one latching bolt (26) is provided on the sliding sleeve (22), this latching bolt (26) being radially displaceable in such a way that it can be brought into engagement with a step (55) provided on the connection piece (2).

10. Connecting device according to Claim 9, **characterized in that** the latching bolt (26) can be displaced against a third spring (52), the latching bolt (26), in a non-depressed basic position, releasing the axial movement between the connection piece (2) and the sliding sleeve (22) and, in a depressed actuating position, carrying along the connection piece (2) during a movement of the sliding sleeve (22) leading away from the locating device (1).

11. Connecting device according to one of Claims 1 to 10, **characterized in that** the supporting sleeve (38) is pressed by the first spring (44) against a stop on the actuating sleeve (28).

12. Connecting device according to Claim 11, **characterized in that** the stop is formed by a ring (30) inserted into the actuating sleeve (28).

## Revendications

1. Dispositif de raccordement (20) permettant de raccorder un tuyau de raccordement ou un tube de raccordement à une structure de réception (1), où la structure de réception présente au moins un élément d'arrêt (11) pouvant être actionné à l'aide d'au moins un élément d'actionnement (13) prévu sur l'extérieur de la structure de réception, comportant un embout de raccordement (2) tubulaire pouvant être raccordé au tuyau de raccordement ou au tube de raccordement et présentant un ergot d'arrêt (10) ou une encoche d'arrêt, qui peut s'engrener dans l'élément d'arrêt (11) de la structure de réception (1),
**caractérisé par**
un manchon d'actionnement (28) permettant d'actionner l'élément d'actionnement (13) de la structure de réception (1) et par un manchon de support (38) qui s'appuie sur la structure de réception (1) et peut être déplacé sur un axe par rapport au manchon d'actionnement (28), sous la précontrainte d'un premier ressort (44).

2. Dispositif de raccordement selon la revendication 1,
**caractérisé en ce qu'**
il est prévu un manchon d'insertion (22) pouvant être saisi par l'extérieur, dans lequel s'emboîte l'embout de raccordement (2).

3. Dispositif de raccordement selon la revendication 2,
**caractérisé en ce que**
l'embout de raccordement (2), le manchon de support (38), le manchon d'actionnement (28) et le manchon d'insertion (22) sont disposés de façon coaxiale l'un par rapport à l'autre.

4. Dispositif de raccordement selon la revendication 3,
**caractérisé en ce que**
le manchon d'insertion (22) entoure au moins en partie le manchon d'actionnement (28), le manchon d'actionnement (28) entoure au moins en partie le manchon de support (38) et le manchon de support (38) entoure au moins en partie l'embout de raccordement (2).

5. Dispositif de raccordement selon l'une des revendications 2 à 4,
**caractérisé en ce qu'**
un élément de couverture (23) est raccordé au manchon d'insertion (22), l'élément de couverture étant traversé par l'embout de raccordement (2).

6. Dispositif de raccordement selon la revendication 5,
**caractérisé en ce qu'**
un palier (34) de l'embout de raccordement (2) bute contre l'élément de couverture (23), de telle sorte que la mobilité axiale de l'embout de raccordement (2) par rapport au manchon d'insertion (22) est limitée sur un côté.

7. Dispositif de raccordement selon la revendication 6,
**caractérisé en ce que**
le manchon d'actionnement (28) est mobile selon un axe par rapport au manchon d'insertion (22), sous la précontrainte d'un deuxième ressort (46).

8. Dispositif de raccordement selon la revendication 7,
**caractérisé en ce que**
le deuxième ressort (46) est disposé entre l'élément de couverture (23) et une face frontale (45) du manchon d'actionnement (28) tournée vers le tuyau de raccordement ou le tube de raccordement.

9. Dispositif de raccordement selon l'une des revendications 2 à 8,
**caractérisé en ce qu'**
il est prévu au moins une goupille d'arrêt (26) au niveau du manchon d'insertion (22), ladite goupille d'arrêt pouvant être déplacée de manière radiale, de telle sorte qu'elle peut s'engrener dans un palier (55) prévu au niveau de l'embout de raccordement (2).

10. Dispositif de raccordement selon la revendication 9,
**caractérisé en ce que**
la goupille d'arrêt (26) est mobile contre un troisième ressort (52), où la goupille d'arrêt (26), dans une position initiale non soumise à une pression, permet un mouvement axial entre l'embout de raccordement (2) et le manchon d'insertion (22) et, dans une position d'actionnement soumise à une pression, entraîne l'embout de raccordement (2) dans un mouvement éloignant le manchon d'insertion (22) de la structure de réception (1).

11. Dispositif de raccordement selon l'une des revendications 1 à 10,
**caractérisé en ce que**
le manchon de support (38) est poussé par le premier ressort (44) contre une butée située au niveau du manchon d'actionnement (28).

12. Dispositif de raccordement selon la revendication 11,
**caractérisé en ce que**
la butée est formée par une bague (30) placée dans le manchon d'actionnement (28).
